# EUROPEAN PATENT APPLICATION

(11) **EP 1 983 503 A2**
(43) Date of publication of application: **22.10.2008**
(21) Application number: 08005724.3
(22) Date of filing: 27.03.2008
(51) Int. Cl.: G09G 3/34, H05B 33/08

(54) **Method for driving a light source, light source driving circuit thereof, light source assembly having the light source driving circuit and display apparatus having the same**

(30) Priority: 20.04.2007 KR 20070038797
(71) Applicant: Samsung Electronics Co., Ltd., Yeongtong-gu Suwon-city, Gyeonggi-do 442-742 (KR)
(72) Inventor: Lee, Ki-Chan, Chungcheongnam-do (KR)
(74) Representative: Dr. Weitzel & Partner

(57) **Abstract**

A method of driving a light source driving circuit includes: applying driving signals, each having a reference frequency different than the reference frequency of other driving signals, to respective color light sources, each emitting a color light; generating a sensing signal based on a sensed mixed light emitted from the color light sources; filtering the sensing signal based on the reference frequency of each of the driving signals; generating color signals corresponding to each of the color light sources based on the filtered sensing signal; outputting light quantity control signals based on the color signals; and controlling a duty ratio of each of the driving signals based on the light quantity control signals to apply the driving signals, each having the controlled duty ratio, to the color light sources to control a quantity of the color light emitted from each of the color light sources.

## Description

### BACKGROUND OF THE INVENTION

### 1. Field of the Invention

The present invention relates to a method for driving a light source, a light source driving circuit for performing the method, a light source assembly having the light source driving circuit and a display apparatus having the light source driving circuit. More particularly, the present invention relates to a method for driving the light source to enhance a display quality and reduce a manufacturing cost thereof, the light source driving circuit for performing the method, the light source assembly having the light source driving circuit and the display apparatus having the light source driving circuit.

### 2. Description of the Related Art

Generally, a liquid crystal display ("LCD") apparatus includes an LCD panel which displays an image by varying a light transmissivity of a liquid crystal layer, allowing a predetermined amount of light from a light source disposed under the LCD panel to pass through the liquid crystal layer.

Recently, to enhance color reproducibility, a plurality of color light-emitting diodes ("LEDs") has been used as the light source in LCDs. However, a brightness of the LEDs decreases during extended operation due to a corresponding increased temperature of the LEDs. To mitigate the decreased brightness of the LEDs in a light source of the prior art, a quantity of color light emitted from each of red, green and blue LEDs is measured and a duty ratio of a driving power source applied to each of the red, green and blue LEDs is controlled to regulate the quantity of color light emitted therefrom. In an LCD apparatus of the prior art, color sensors to sense respective quantities of color light emitted from the red, green and blue LEDs require color filters.

Further, the color sensors of the prior art each have different sensitivities, based on a characteristic of the color filter and a manufacturing process, and a large quantity of the color sensors is thereby necessary in order to sense a quantity of light emitted from each LED of a plurality of LEDs. As a result, the color sensors of the prior art are difficult to stabilize and manufacturing costs thereof are increased.

### BRIEF SUMMARY OF THE INVENTION

According to exemplary embodiments of the present invention, a light sensor without a color filter may be used to decrease manufacturing costs and easily compensate a color light quantity.

Exemplary embodiments of the present invention provide a method for driving a light source for compensating a light quantity, a light source driving circuit for performing the method for driving the light source, a light source assembly having the light source driving circuit and a display apparatus having the light source driving circuit.

In an exemplary embodiment of the present invention for driving a light source, driving signals, each driving signal having a reference frequency and each respective reference frequency for a given driving signal being different than the reference frequency of other driving signals, are provided to color light sources each emitting a color light. A sensing signal is generated based on a sensed mixed light emitted from the color light sources, the sensing signal is filtered based on the respective reference frequency of each of the driving signals and color signals corresponding to each of the color light sources based on the filtered sensing signal are generated. Light quantity control signals based on the color signals corresponding to each of the color light sources are output and a duty ratio of each of the driving signals is controlled based on the light quantity control signals to apply the driving signals, each having the controlled duty ratio, to the color light sources to control a quantity of the color light emitted from each of the color light sources.

The color light sources include a first color light source having a red light-emitting diode, a second color light source having a green light-emitting diode and a third color light source having a blue light-emitting diode.

Further, a first driving signal having a first reference frequency is applied to the first color light source, a second driving signal having a second reference frequency is applied to the second color light source and a third driving signal having a third reference frequency is applied to the third color light source.

The color signals may include a first color signal corresponding to the first color light source and generated by filtering the sensing signal based on the first reference frequency, a second color signal corresponding to the second color light source and generated by filtering the sensing signal based on the second reference frequency and a third color signal corresponding to the third color light source and generated by filtering the sensing signal based on the third reference frequency.

The light quantity control signals may include a first light quantity control signal to compensate the first color light source based on the first color signal, a second light quantity control signal to compensate the second color light source based on the second color signal and a third light quantity control signal to compensate the third color light source based on the third color signal.

The first driving signal having a first duty ratio controlled by the first light quantity control signal is applied to the first color light source, the second driving signal having a second duty ratio controlled by the second light quantity control signal is applied to the second color light source and the third driving signal having a third duty ratio controlled by the third light quantity control signal is applied to the third color light source.

In a light source driving circuit according to an exemplary embodiment of the present invention, the light source driving circuit includes a driving control part, a light-sensing part, a filter and a comparison compensation part.

The driving control part applies driving signals, each driving signal having a reference frequency, each respective reference frequency for a given driving signal being different than the reference frequency of other driving signals, to color light sources, each color light source emitting a color light.
The light-sensing part senses a mixed light emitted from the color light sources and outputs a sensing signal.

The filter filters the sensing signal based on the respective reference frequency of each of the driving signals and outputs color signals.

The comparison compensation part generates light quantity control signals based on the color signals corresponding to each of the color light sources and which compensate a light quantity of each of the color light sources based on the light quantity control signals sent to the driving control part.

The driving control part controls a duty ratio of each of the driving signals based on the light quantity control signals and applies the driving signals, each having the controlled duty ratio, to the color light sources.

The color light sources may include a first color light source having a red light emitting diode, a second color light source having a green light-emitting diode and a third color light source having a blue light-emitting diode.

The driving control part applies a first driving signal having a first reference frequency to the first color light source, applies a second driving signal having a second reference frequency to the second color light source and applies a third driving signal having a third reference frequency to the third color light source.

The filter may include: a first band-pass filter which filters a first color signal having the first reference frequency, and outputs the first color signal to the comparison compensation part; a second band-pass filter which filters a second color signal having the second reference frequency, and outputs the second color signal to the comparison compensation part; and a third band-pass filter which filters a third color signal having the third reference frequency, and outputs the third color signal to the comparison compensation part.

The comparison compensation part generates a first light quantity control signal which compensates a light quantity of the first color light source, generates a second light quantity control signal which compensates a light quantity of the second color light source and generates a third light quantity control signal which compensates a light quantity of the third color light source.

The driving control part controls a first duty ratio of the first driving signal based on the first light quantity control signal and outputs the first driving signal having the controlled first duty ratio, controls a second duty ratio of the second driving signal based on the second light quantity control signal and outputs the second driving signal having the controlled second duty ratio and controls a third duty ratio of the third driving signal based on the third light quantity control signal and outputs the third driving signal having the controlled third duty ratio.

In a light source assembly according to an exemplary embodiment of the present invention, the light source assembly includes a light source part including color light sources, each of which emits a color light, and a light source driving circuit.

The light source driving circuit includes a driving control part, a light-sensing part, a filter and a comparison compensation part.

The driving control part applies driving signals, each driving signal having a reference frequency, each respective reference frequency for a given driving signal being different than the reference frequency of other driving signals, to a respective color light source of the color light sources.

The light-sensing part senses a mixed light emitted by the color light sources and outputs a sensing signal.

The filter filters the sensing signal based on the reference frequency of each of the driving signals and outputs color signals.

The comparison compensation part generates light quantity control signals based on the color signals corresponding to each of the color light sources and which compensate a light quantity of each color light source based on the light quantity control signals sent to the driving control part.

The driving control part applies a first driving signal having a first reference frequency to a first color light source, a second driving signal having a second reference frequency to a second color light source and a third driving signal having a third reference frequency to a third color light source.

The filter includes: a first band-pass filter which filters a first color signal having the first reference frequency and outputs the filtered first color signal to the comparison compensation part; a second band-pass filter which filters a second color signal having the second reference frequency and outputs the filtered second color signal to the comparison compensation part; and a third band-pass filter which filters a third color signal having the third reference frequency and outputs the filtered third color signal to the comparison compensation part.

The comparison compensation part generates a first light quantity control signal which compensates a light quantity of the first light source, a second light quantity control signal which compensates a light quantity of the second color light source and a third light quantity control signal which compensates a light quantity of the third color light source.

In a display apparatus according to an exemplary embodiment of the present invention, the display apparatus includes a display panel, a light source part which provides a mixed light to the display panel and comprises color light sources, each of which emits a color light, and a light source driving circuit.

The light source driving circuit includes a driving control part, a light-sensing part, a filter and a comparison compensation part.

The driving control part of the light source driving part applies driving signals, each driving signal having a reference frequency, each respective reference frequency for a given driving signal being different than the reference frequency of other driving signals, to color light sources.

The light-sensing part of the light source driving part senses the mixed light and outputs a sensing signal.

The filter of the light source driving part filters the sensing signal based on the reference frequency of each of the driving signals and outputs color signals.

The comparison compensation of the light source driving part generates light quantity control signals based on the color signals corresponding to each of the color light sources and which compensate a light quantity of each of the color light sources based on the light quantity control signals sent to the driving control part.

The driving control part applies a first driving signal having a first reference frequency to a first color light source, a second driving signal having a second reference frequency to a second color light source and a third driving signal having a third reference frequency to a third color light source.

The filter includes: a first band-pass filter which filters a first color signal having the first reference frequency and outputs the first color signal to the comparison compensation part; a second band-pass filter which filters a second color signal having the second reference frequency and outputs the second color signal to the comparison compensation part; and a third band-pass filter which filters a third color signal having the third reference frequency and outputs the third color signal to the comparison compensation part.

### BRIEF DESCRIPTION OF THE DRAWINGS

The above and other aspects, features and advantages of the present invention will become more readily apparent by describing in further detail exemplary embodiments thereof with reference to the accompanying drawings, in which:
FIG. 1 is an exploded perspective view of a display apparatus according to an exemplary embodiment of the present invention;
FIG. 2 is a block diagram of a display apparatus according to the exemplary embodiment of the present invention in FIG. 1;
FIG. 3 is a block diagram of a light source driving circuit and a light source part according to the exemplary embodiment of the present invention in FIG. 1;
FIGS. 4A, 4B and 4C are graphs of voltage versus time illustrating driving signals of a driving control part according to the exemplary embodiment of the present invention in FIG. 3;
FIG. 5 is a block diagram illustrating a driving method of a light source driving circuit according to the exemplary embodiment of the present invention in FIG. 3;
FIG. 6 is a schematic circuit diagram of a band-pass filter according to the exemplary embodiment of the present invention in FIG. 3; and
FIGS. 7A and 7B are flow charts illustrating a driving method for a light source driving circuit according to the exemplary embodiment of the present invention in FIG. 3.

### DETAILED DESCRIPTION OF THE INVENTION

The invention will now be described more fully hereinafter with reference to the accompanying drawings, in which exemplary embodiments of the invention are shown. The present invention may, however, be embodied in many different forms and should not be construed as limited to the embodiments set forth herein.

Rather, these embodiments are provided so that this disclosure will be thorough and complete, and will fully convey the scope of the invention to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present. As used herein, the term "and/or" includes any and all combinations of one or more of the associated listed items.

It will be understood that although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including," when used in this specification, specify the presence of stated features, regions, integers, steps, operations, elements and/or components, but do not preclude the presence or addition of one or more other features, regions, integers, steps, operations, elements, components and/or groups thereof.

Furthermore, relative terms, such as "lower" or "bottom" and "upper" or "top" may be used herein to describe one element's relationship to other elements as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on the "upper" side of the other elements. The exemplary term "lower" can, therefore, encompass both an orientation of "lower" and "upper," depending upon the particular orientation of the figure. Similarly, if the device in one of the figures were turned over, elements described as "below" or "beneath" other elements would then be oriented "above" the other elements. The exemplary terms "below" or "beneath" can, therefore, encompass both an orientation of above and below.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning which is consistent with their meaning in the context of the relevant art and the present disclosure, and will not be interpreted in an idealized or overly formal sense unless expressly so defined herein.

Exemplary embodiments of the present invention are described herein with reference to cross section illustrations which are schematic illustrations of idealized embodiments of the present invention. As such, variations from the shapes of the illustrations as a result, for example, of manufacturing techniques and/or tolerances, are to be expected. Thus, embodiments of the present invention should not be construed as limited to the particular shapes of regions illustrated herein but are to include deviations in shapes which result, for example, from manufacturing. For example, a region illustrated or described as flat may, typically, have rough and/or nonlinear features. Moreover, sharp angles which are illustrated may be rounded. Thus, the regions illustrated in the figures are schematic in nature and their shapes are not intended to illustrate the precise shape of a region and are not intended to limit the scope of the present invention.

Hereinafter, exemplary embodiments of the present invention will be described in further detail with reference to the accompanying drawings.

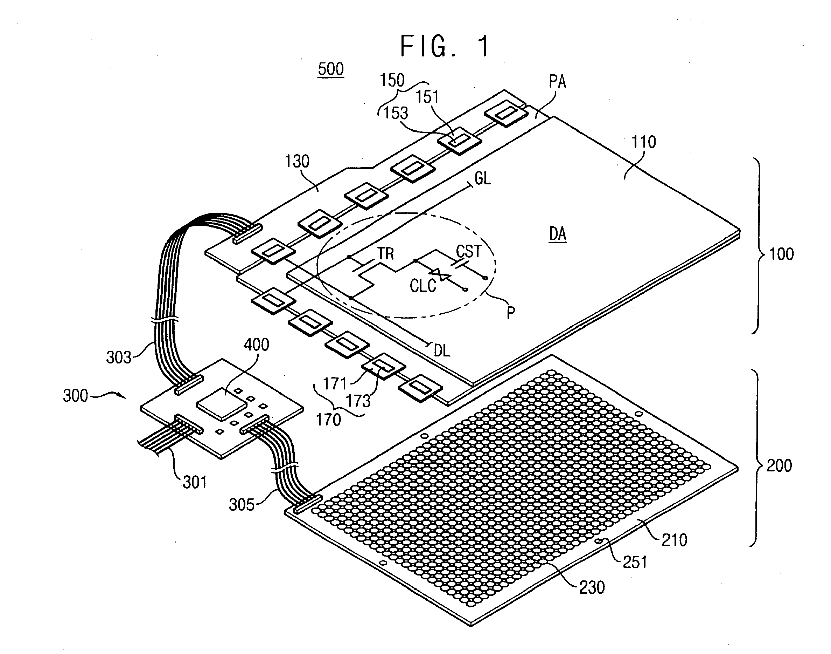

FIG. 1 is an exploded perspective view of a display apparatus according to an exemplary embodiment of the present invention.

Referring to FIG. 1, a display apparatus 500 includes a display panel assembly 100, a light source assembly 200 and a controller unit 300.

The display panel assembly 100 includes a display panel 110, a source printed circuit board ("PCB") 130, a source driving circuit 150 and a gate driving circuit 170.

The display panel 110 includes a display area DA and a peripheral area PA. The peripheral area PA substantially surrounds the display area DA, as shown in FIG. 1, but is not limited thereto in alternative exemplary embodiments. The display area DA includes a plurality of pixel portions P, each pixel portion P being electrically connected to a gate line GL of a plurality of gate lines GL and a source line DL of a plurality of source lines DL. More specifically, each pixel portion P includes a respective source line DL, a switching element TR electrically connected to a respective gate line GL, a liquid crystal capacitor CLC electrically connected to the switching element TR and a storage capacitor CST electrically connected to the liquid crystal capacitor CLC.

The source PCB 130 is electrically connected to the display panel 110. The source PCB 130 transmits a control signal and an image signal, provided from the controller unit 300, to the gate driving circuit 170 and the source driving circuit 150, respectively.

The source driving circuit 150 includes a first flexible PCB ("FPCB") 151 and a source driving chip 153. A first end portion of the first FPCB 151 is electrically connected to the source PCB 130, and a second end portion of the first FPCB 151 is electrically connected to respective source lines DL of the plurality of source lines DL of the display panel 110. The source driving chip 153 is mounted on the first FPCB 151 and outputs the image signal applied to the source lines DL by the source driving circuit 150. The source driving circuit 150 may be a tape carrier package ("TCP") or a chip-on-film ("COF"), for example, but is not limited thereto.

The gate driving circuit 170 includes a second FPCB 171 and a gate driving chip 173. The second FPCB 171 is electrically connected to respective gate lines GL of the plurality of gate lines GL of the display panel 110, and the gate driving chip 173 outputs a gate signal to the gate lines GL. The gate driving chip 173 is mounted on the second FPCB 171. The gate driving circuit 170 may be a TCP, a COF or a shift register integrated into the peripheral area PA of the display panel 110, for example, but is not limited thereto in alternative exemplary embodiments of the present invention.

Still referring to FIG. 1, the light source assembly 200 includes a driving substrate 210, a light source part 230 and at least one light sensor 251.

The driving substrate 210 further includes a control line (not shown) which transmits a light quantity control signal to the light source part 230 and a power source line (not shown) which transmits a driving signal to the light source part 230.

The light source part 230 includes a plurality of color light sources (not specifically labeled in FIG. 1) which emit color light. In an exemplary embodiment of the present invention, the plurality of color light sources includes red, green and blue light-emitting diodes ("LEDs"), for example, but is not limited thereto. The light source part 230 is disposed on the driving substrate 210. The light source part 230 is electrically connected to the control line (not shown) to be controlled by the control line, and is electrically connected to the power source line (not shown) to receive the driving signal.

As shown in FIG. 1, at least one light sensor 251 is disposed on an outer peripheral edge of the driving substrate 210, for example, to sense a mixed light of the plurality of color light sources emitted from the light source part 230. In an exemplary embodiment, the at least one light sensor 251 may sense a quantity of a white light which is a mixed light emitted from the red, green and blue LEDs.

The controller unit 300 includes a main driving circuit 400, a first connector 301, a second connector 303 and a third connector 305. The main driving circuit 400 is electrically connected to an outside system (not shown) through the first connector 301, and is electrically connected to the display panel assembly 100 through the second connector 303. Finally, the main driving circuit 400 is electrically connected to the light source assembly 200 through the third connector 305, as shown in FIG. 1.

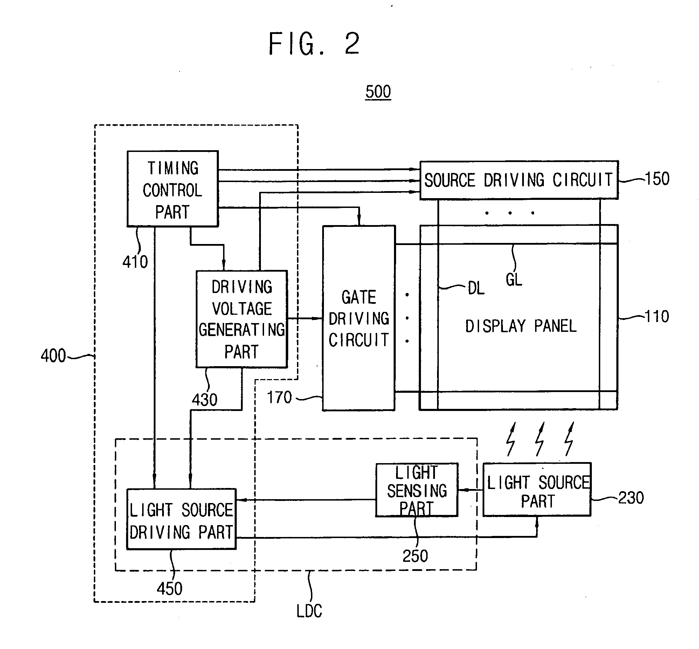

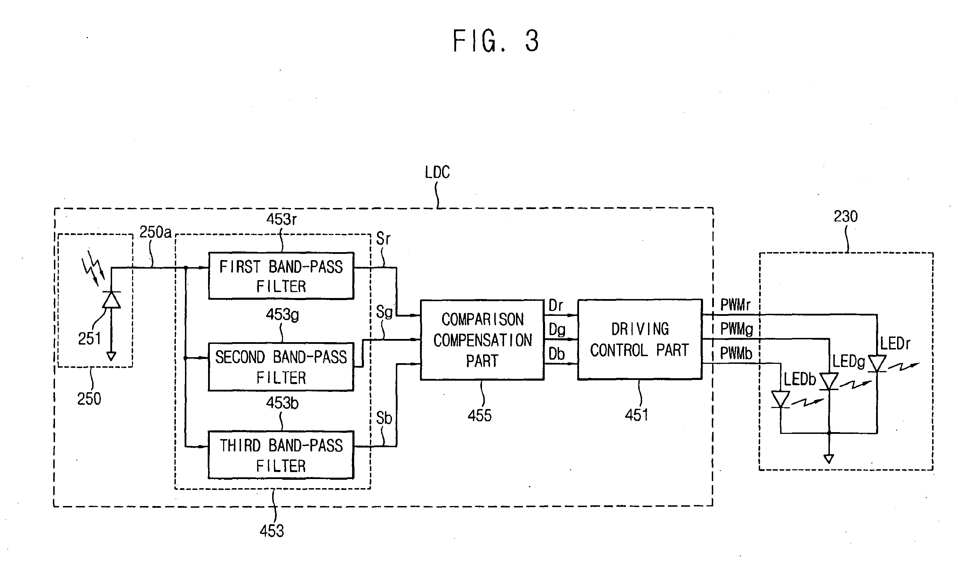

FIG. 2 is a block diagram of a display apparatus according to the exemplary embodiment of the present invention in FIG. 1. FIG. 3 is a block diagram of a light source driving circuit and a light source part according to the exemplary embodiment of the present invention in FIG. 1.

Referring to FIGS. 2 and 3, the display apparatus 500 includes a main driving circuit 400, the source driving circuit 150 and the gate driving circuit 170.

The main driving circuit 400 includes a timing control part 410, a driving voltage generating part 430 and a light source driving part 450. The timing control part 410 receives the control signal and the image signal from the controller unit 300, as described above in greater detail, and controls the display apparatus 500 based on the control signal.

The driving voltage generating part 430 generates driving voltages to drive the display apparatus 500. In an exemplary embodiment, the driving voltage generating part 430 generates an analog power source voltage AVDD (not shown) and a digital power source voltage DVDD (not shown) to drive the source driving circuit 150, and generates a gate-on voltage VON (not shown) and a gate-off voltage VOFF (not shown) to drive the gate driving circuit 170. The driving voltage generating part 430 also generates a power source voltage VDD (not shown) to drive the light source driving part 450.

The light source driving part 450 drives the light source part 230 and a light-sensing part 250 having the at least one light sensor 251 (FIG. 1) based on a control signal (not shown) of the timing control part 410; and compensates a light quantity emitted from the light source part 230 based on a sensing signal 250a (FIG. 3 only) sensed by the light-sensing part 250. As described above, the light source part 230 includes the plurality of color light sources (FIG. 1) which may include a red light-emitting diode LEDr, a green light-emitting diode LEDg and a blue light-emitting diode LEDb, for example, but is not limited thereto.

A light source driving circuit LDC drives the light source part 230, and includes the light source driving part 450 and the light sensing part 250. As illustrated in FIG. 3, the light source driving circuit LDC includes a driving control part 451, a filter 453 including a first band-pass filter 453r, a second first band-pass filter 453g and a third first band-pass filter 453b, a comparison compensation part 455 and the light-sensing part 250.

The driving control part 451 provides a driving signal, modulated into a pulse width modulation ("PWM") signal, to the light source part 230.

Referring to FIG. 3, the filter 453 filters the sensing signal 250a sensed by the light-sensing part 250 and outputs a first color signal Sr, a second color signal Sg and a third color signal Sb to the comparison compensation part 455. More specifically, the filter 453 includes the first band-pass filter 453r which filters the sensing signal 250a according to a first reference frequency fr, the second band-pass filter 453g which filters the sensing signal 250a according to a second reference frequency fg and the third band-pass filter 453b which filters the sensing signal 250a according to a third reference frequency fb.

Thus, the first band-pass filter 453r outputs the first color signal Sr corresponding to the first reference frequency fr, the second band-pass filter 453g outputs the second color signal Sg of the second reference frequency fg and the third band-pass filter 453b outputs the third color signal Sb of the third reference frequency fb.

The first color signal Sr corresponds to a quantity of red light emitted from the red LED LEDr, the second color signal Sg corresponds to a quantity of green light emitted from the green LED LEDg and the third color signal Sb corresponds to a quantity of blue light emitted from the blue LED LEDb.

The comparison compensation part 455 compares the first color signal Sr, the second color signal Sg and the third color signal Sb to the first reference frequency fr, the second reference frequency fg and the third reference frequency fb, respectively, and outputs a first light quantity control signal Dr, a second light quantity control signal Dg and a third light quantity control signal Db, each being proportional to the respective compared color signal.

The first, second and third light quantity control signals Dr, Dg and Db, respectively, control a light quantity (e.g., a brightness) of the red, green and blue LEDs LEDr, LEDg and LEDb, respectively, of the light source part 230 according to the first, second and third color signals Sr, Sg and Sb, respectively, outputted from the filter 453.

More specifically, the driving control part 451 applies a first driving signal PWMr having the first reference frequency fr to the red LED LEDr, a second driving signal PWMg having the second reference frequency fg to the green LED LEDg and a third driving signal PWMb having the third reference frequency fb to the blue LED LEDb.

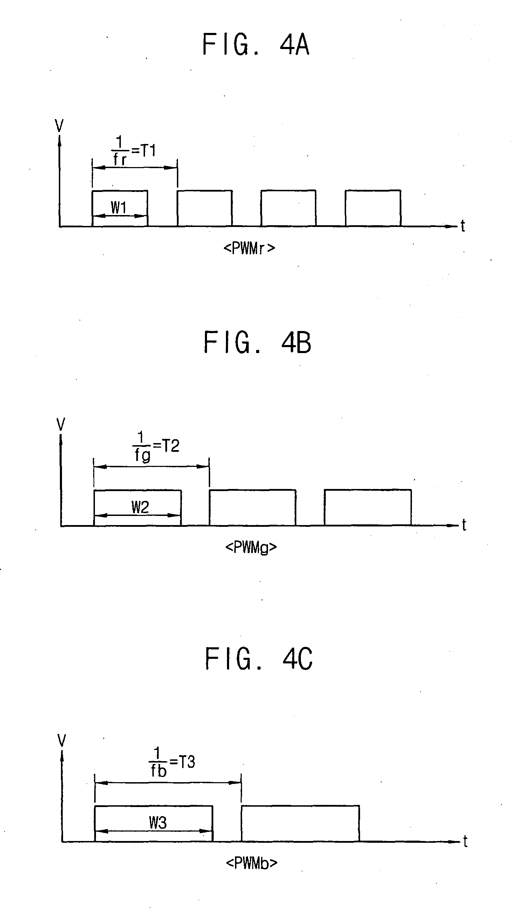

FIGS. 4A, 4B and 4C are graphs of voltage versus time illustrating driving signals of a driving control part according to the exemplary embodiment of the present invention in FIG. 3. A method of driving a light source according to an exemplary embodiment of the present invention will now be described in further detail with reference to FIGS. 3, 4A, 4B and 4C. More specifically, a method of compensating color signals to output corresponding light quantity control signals will be described in further detail.

Referring to FIGS. 3, 4A, 4B and 4C, the comparison compensation part 455 calculates a plurality of sensing color coordinates (not shown) of the mixed light emitted from the light source part 230 using the first, second and third color signals Sr, Sg and Sb, respectively. Each sensing color coordinate, e.g., a red sensing color coordinate, a green sensing color coordinate and a blue sensing color coordinate (not shown), of the plurality of sensing color coordinates is compared with a corresponding reference color coordinate (not shown), and each of the sensing color coordinates, e.g., the red sensing color coordinate, the green sensing color coordinate and the blue sensing color coordinate, is compensated. Thus, the first, second and third light quantity control signals Dr, Dg and Db, respectively, are generated using each of the compensated sensing color coordinates, and the first, second and third light quantity control signals Dr, Dg and Db, respectively, are outputted to the driving control part 451. The first light quantity control signal Dr controls the light quantity of the red LED LEDr, the second light quantity control signal Dg controls the light quantity of the green LED LEDg, and the third light quantity control signal Db controls the light quantity of the blue LED LEDb.

More specifically, the driving control part 451 generates the first, second and third driving signals PWMr, PWMg and PWMb, respectively, based on the first, second and third light quantity control signals Dr, Dg and Db, respectively, provided from the comparison compensation part 455, and applies the first, second and third driving signals PWMr, PWMg and PWMb, respectively, to the red, green and blue LEDs LEDr, LEDg and LEDb, respectively. Accordingly, first, second and third pulse widths W1, W2 and W3 (FIGS. 4A, 4B and 4C, respectively) of the first, second and third driving signals PWMr, PWMg and PWMb, respectively, are controlled to control the light quantity of the red, green and blue LEDs LEDr, LEDg and LEDb, respectively. A first reference period T1 of the first driving signal PWMr, a second reference period T2 of the first driving signal PWMg and a third reference period T3 of the third driving signal PWMb are equal to an inverse of the first reference frequency fr, the second reference frequency fg and the third reference frequency fb, respectively, as illustrated in FIGS. 4A, 4B and 4C, respectively.

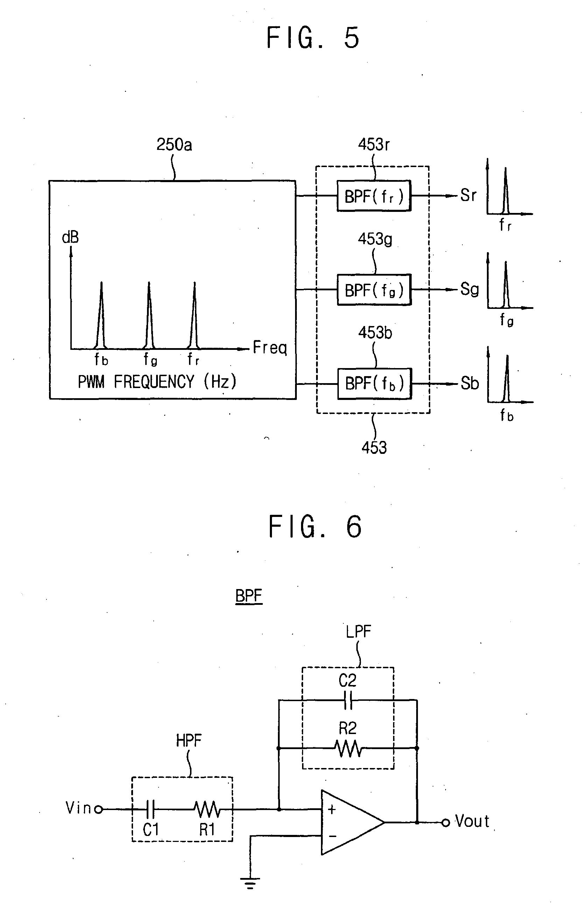

FIG. 5 is a block diagram illustrating a driving method of a light source driving circuit according to the exemplary embodiment of the present invention in FIG. 3. FIG. 6 is a schematic circuit diagram of a band-pass filter according to the exemplary embodiment of the present invention in FIG. 3.

Referring to FIGS. 3, 5 and 6, the red LED LEDr of the light source part 230 is driven by the first driving signal PWMr having the first reference frequency fr, the green LED LEDg of the light source part 230 is driven by the second driving signal PWMg having the second reference frequency fg and the blue LED LEDb of the light source part 230 is driven by the third driving signal PWMb having the third reference frequency fb, as described above in greater detail.

The light-sensing part 250 senses the light quantity of the mixed light of the color lights emitted from the red, green and blue LEDs LEDr, LEDg and LEDb, respectively, and outputs the sensing signal 250a. The sensing signal 250a includes components having the first, second and third reference frequencies fr, fg and fb, respectively.

Referring to FIG. 5, the sensing signal 250a is inputted to the filter 453. The first band-pass filter ("BPF") 453r passes a component of the sensing signal 250a having substantially only the first reference frequency fr, and thereby outputs the first color signal Sr corresponding to a quantity of light output by the red LED LEDr. The second band-pass filter 453g passes a component of the sensing signal 250a having substantially only the second reference frequency fg, and thereby outputs the second color signal Sg corresponding to a quantity of light output by the green LED LEDg. The third band-pass filter 453b passes a component of the sensing signal 250a having substantially only the third reference frequency fb, and thereby outputs the third color signal Sb corresponding to a quantity of light output the blue LED LEDb.

Referring to FIG. 6, a band-pass filter BPF according to an exemplary embodiment of the present invention includes a low-pass filter LPF and a high-pass filter HPF. The low-pass filter LPF includes a first resistor R1 having a resistance R1 and a first capacitor C1 having a capacitance C1. The high-pass filter HPF includes a second resistor R2 having a resistance R2 and a second capacitor C2 having a capacitance C2.

An input signal Vin is filtered by the high-pass filter HPF, such that substantially only a first signal having a frequency greater than a first cut-off frequency passes through the high-pass filter HPF. Then, the first signal passing through the high-pass filter HPF is filtered by the low-pass filter LPF such that a second signal having substantially only a frequency less than a second cut-off frequency passes through the low-pass filter LPF.

Thus, an output signal Vout having the frequency greater than the first cut-off frequency and less than the second cut-off frequency passes through the band-pass filter BPF. In the exemplary embodiment shown in FIG. 6, the first cut-off frequency is equal to 1/(2πR1C1) and the second cut-off frequency is equal to 1/(2πR2C2).

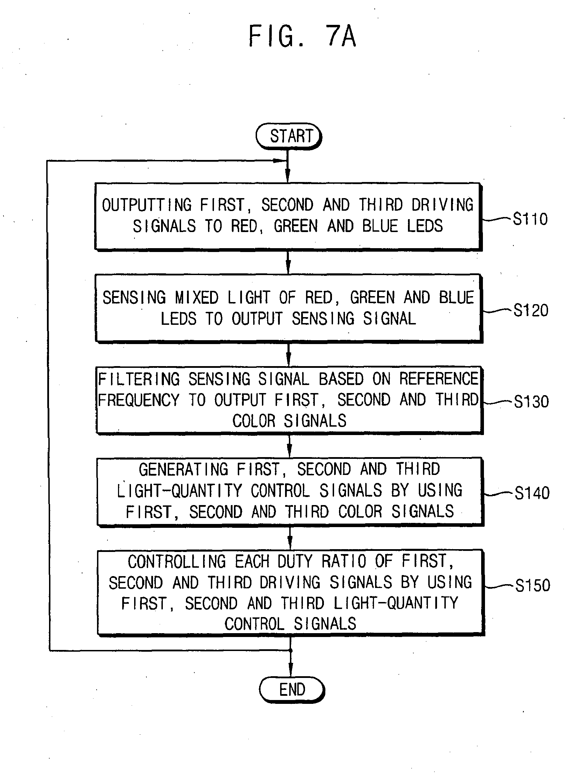

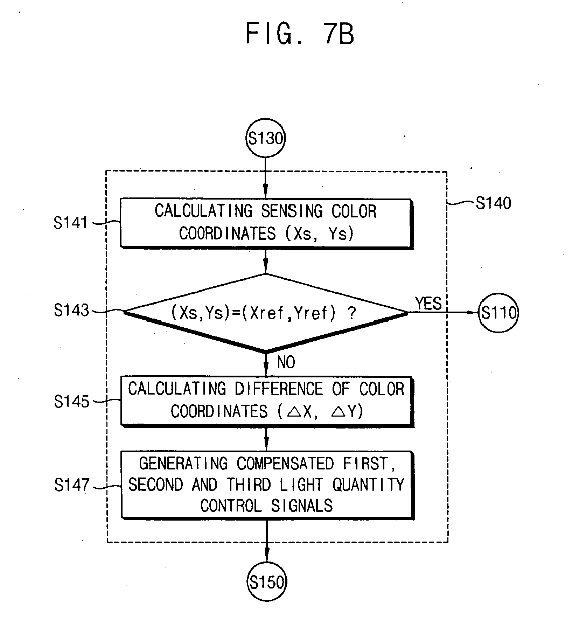

FIGS. 7A and 7B are flow charts illustrating a driving method for a light source driving circuit according to the exemplary embodiment of the present invention in FIG. 3.

Referring to FIGS. 3 and 7A, in step S110 the driving control part 451 applies the first driving signal PWMr, the second driving signal PWMg and the third driving signal PWMb to the red LED LEDr, the green LED LEDg and the blue LED LEDb, respectively, of the light source part 430 to drive the light source part 430, as described above in greater detail.

Thus, the red, green and blue LEDs LEDr, LEDg and LEDb, respectively, are driven in step S110.

In step S120, the light-sensing part 250 senses mixed light from the red, green and blue LEDs LEDr, LEDg and LEDb, respectively, emitted from the light source part 230, to output the sensing signal 250a.

In step S130, the filter 453 filters the sensing signal 250a and outputs the first, second and third color signals Sr, Sg and Sb, respectively. More specifically, the first band-pass filter 453r filters the first color signal Sr having the first reference frequency fr, the second band-pass filter 453g filters the second color signal Sg having the second reference frequency fg and the third band-pass filter 453b filters the third color signal Sb having the third reference frequency fb.

In step S140, the comparison compensation part 455 generates the first, second and third light quantity control signals Dr, Dg and Db, respectively, for controlling a light quantity (e.g., a brightness) of the red, green and blue LEDs LEDr, LEDg and LEDb, respectively, using the first, second and third color signals Sr, Sg and Sb, respectively, and outputs the first, second and third light quantity control signals Dr, Dg and Db, respectively, to the driving control part 451.

Referring to FIGS. 3 and 7B, in step S141 the comparison compensation part 455 calculates sensing color coordinates Xs and Ys of the mixed light using the first, second and third color signals Sr, Sg and Sb, respectively.

In step S143, the comparison compensation part 455 compares the sensing color coordinates Xs and Ys to respective predetermined reference color coordinates Xref and Yref of the mixed light. When the sensing color coordinates Xs and Ys are equal to the respective predetermined reference color coordinates Xref and Yref of the mixed light, uncompensated first, second and third driving signals PWMr, PWMg and PWMb, respectively, are outputted to the red, green and blue LEDs LEDr, LEDg and LEDb, respectively, of the light source part 230 (e.g., in a subsequent step S110). In contrast, when the sensing color coordinates Xs and Ys are different than the reference color coordinates Xref and Yref, differences ΔX and ΔY between the sensing color coordinates Xs and Ys, respectively, and the reference color coordinates Xref and Yref, respectively, are calculated (step S145). Then, the comparison compensation part 455 calculates a color compensation value (not shown) corresponding to the differences ΔX and ΔY using a color compensation algorithm (not shown), and generates the first, second and third light quantity control signals Dr, Dg and Db, respectively, corresponding to the color compensation value (step S147), and outputs the first, second and third light quantity control signals Dr, Dg and Db, respectively, to the driving control part 451.

Referring again to FIGS. 3 and 7A, in step S150, the driving control part 451 controls a duty ratio of each of the first, second and third driving signals PWMr, PWMg and PWMb, respectively, according to the first, second and third light quantity control signals Dr, Dg and DB, respectively.

The driving control part 451 outputs the first, second and third driving signals PWMr, PWMg and PWMb, respectively, the duty ratio of each of which is controlled, to the red, green and blue LEDs LEDr, LEDg and LEDb, respectively, in a subsequent step S110. Accordingly, the red, green and blue LEDs LEDr, LEDg and LEDb emit a compensated color light.

As described above, when the sensing color coordinates Xs and Ys are substantially the same as the reference color coordinates Xref and Yref in step S143, the comparison compensation part 455 does not change a duty ratio of each of the first, second and third driving signals PWMr, PWMg and PWMb, respectively, but instead outputs the first, second and third driving signals PWMr, PWMg and PWMb, respectively, to the red, green and blue LEDs LEDr, LEDg and LEDb, respectively, in a subsequent step S110.

Accordingly, the red, green and blue LEDs LEDr, LEDg and LEDb, respectively, are driven by the driving signals PWMr, PWMg and PWMb, respectively, having the reference frequencies fr, fg and fb, respectively, and the mixed light is sensed by the light sensor 251 without a color filter.

Thus, according to an exemplary embodiment of the present invention, a reference frequency of a driving signal applied to a color LED is compensated according to a color signal, and a mixed color is detected by a light sensor without using a color filter. The color signal of the mixed light passes through a band-pass filter and a quantity of light output from the color LED according to the color signal is detected. The light output is compensated using the quantity of light output from the color LED according to the color signal, and a duty ratio of a driving signal modulated into a PWM signal is controlled according to a desired compensation, and the quantity of light output by the color LED is thereby controlled.

Thus, according to exemplary embodiments of the present invention as described herein, a light sensor without a color filter is used, thereby effectively reducing manufacturing costs thereof. Further, a problem from variations of the color sensor due to differences of a characteristic and a sensitivity of different color filters according to a manufacturing process, for example, are effectively decreased. Accordingly, reliability and cost effectiveness of color compensation are effectively enhanced.

The present invention should not be construed as being limited to the exemplary embodiments set forth herein. Rather, these exemplary embodiments are provided so that this disclosure will be thorough and complete and will fully convey the concept of the present invention to those skilled in the art.

While the present invention has been particularly shown and described with reference to exemplary embodiments thereof, it will be understood by those of ordinary skill in the art that various changes in form and details may be made therein without departing from the spirit or scope of the present invention as defined by the following claims.

## Claims

1. A method for driving a light source, the method comprising:
applying driving signals, each driving signal having a reference frequency, each respective reference frequency for a given driving signal being different than the reference frequency of other driving signals, to color light sources, each color light source emitting a color light;
generating a sensing signal based on a sensed mixed light emitted from the color light sources;
filtering the sensing signal based on the respective reference frequency of each of the driving signals;
generating color signals corresponding to each of the color light sources based on the filtered sensing signal;
outputting light quantity control signals based on the color signals corresponding to each of the color light sources; and
controlling a duty ratio of each of the driving signals based on the light quantity control signals to apply the driving signals, each having the controlled duty ratio, to the color light sources to control a quantity of the color light emitted from each of the color light sources.

2. The method of claim 1, wherein the color light sources comprise: a first color light source having a red light-emitting diode;
a second color light source having a green light-emitting diode; and
a third color light source having a blue light-emitting diode.

3. The method of claim 2, wherein
a first driving signal having a first reference frequency is applied to the first color light source,
a second driving signal having a second reference frequency is applied to the second color light source, and
a third driving signal having a third reference frequency is applied to the third color light source.

4. The method of claim 3, wherein the color signals comprise:
a first color signal corresponding to the first color light source and generated by filtering the sensing signal based on the first reference frequency;
a second color signal corresponding to the second color light source and generated by filtering the sensing signal based on the second reference frequency; and
a third color signal corresponding to the third color light source and generated by filtering the sensing signal based on the third reference frequency.

5. The method of claim 4, wherein the light quantity control signals comprise:
a first light quantity control signal to compensate the first color light source based on the first color signal;
a second light quantity control signal to compensate the second color light source based on the second color signal; and
a third light quantity control signal to compensate the third color light source based on the third color signal.

6. The method of claim 5, wherein
the first driving signal having a first duty ratio controlled by the first light quantity control signal is applied to the first color light source,
the second driving signal having a second duty ratio controlled by the second light quantity control signal is applied to the second color light source, and
the third driving signal having a third duty ratio controlled by the third light quantity control signal is applied to the third color light source.

7. A light source driving circuit comprising:
a driving control part which applies driving signals, each driving signal having a reference frequency, each respective reference frequency for a given driving signal being different than the reference frequency of other driving signals, to color light sources, each color light source emitting a color light;
a light-sensing part which senses a mixed light emitted from the color light sources and outputs a sensing signal;
a filter which filters the sensing signal based on the respective reference frequency of each of the driving signals and outputs color signals; and
a comparison compensation part which generates light quantity control signals based on the color signals corresponding to each of the color light sources and which compensate a light quantity of each of the color light sources based on the light quantity control signals sent to the driving control part.

8. The light source driving circuit of claim 7, wherein the driving control part controls a duty ratio of each of the driving signals based on the light quantity control signals and applies the driving signals, each having the controlled duty ratio, to the color light sources.

9. The light source driving circuit of claim 7, wherein the color light sources comprise:
a first color light source having a red light emitting diode;
a second color light source having a green light-emitting diode; and
a third color light source having a blue light-emitting diode.

10. The light source driving circuit of claim 9, wherein
the driving control part applies a first driving signal having a first reference frequency to the first color light source,
the driving control part applies a second driving signal having a second reference frequency to the second color light source, and
the driving control part applies a third driving signal having a third reference frequency to the third color light source.

11. The light source driving circuit of claim 10, wherein the filter comprises:
a first band-pass filter which filters a first color signal having the first reference frequency, and outputs the first color signal to the comparison compensation part;
a second band-pass filter which filters a second color signal having the second reference frequency, and outputs the second color signal to the comparison compensation part; and
a third band-pass filter which filters a third color signal having the third reference frequency, and outputs the third color signal to the comparison compensation part.

12. The light source driving circuit of claim 11, wherein
the comparison compensation part generates a first light quantity control signal which compensates a light quantity of the first color light source,
the comparison compensation part generates a second light quantity control signal which compensates a light quantity of the second color light source, and
the comparison compensation part generates a third light quantity control signal which compensates a light quantity of the third color light source.

13. The light source driving circuit of claim 12, wherein
the driving control part controls a first duty ratio of the first driving signal based on the first light quantity control signal and outputs the first driving signal having the controlled first duty ratio,
the driving control part controls a second duty ratio of the second driving signal based on the second light quantity control signal and outputs the second driving signal having the controlled second duty ratio, and
the driving control part controls a third duty ratio of the third driving signal based on the third light quantity control signal and outputs the third driving signal having the controlled third duty ratio.

14. A light source assembly comprising:
a light source part comprising color light sources, each of which emits a color light; and
a light source driving circuit comprising:
a driving control part which applies driving signals, each driving signal having a reference frequency, each respective reference frequency for a given driving signal being different than the reference frequency of other driving signals, to a respective color light source of the color light sources;
a light-sensing part which senses a mixed light emitted by the color light sources and outputs a sensing signal;
a filter which filters the sensing signal based on the reference frequency of each of the driving signals and outputs color signals; and
a comparison compensation part which generates light quantity control signals based on the color signals corresponding to each of the color light sources and which compensate a light quantity of each color light source based on the light quantity control signals sent to the driving control part.

15. The light source assembly of claim 14, wherein
the driving control part applies a first driving signal having a first reference frequency to a first color light source,
a second driving signal having a second reference frequency to a second color light source, and
a third driving signal having a third reference frequency to a third color light source.

16. The light source assembly of claim 15, wherein the filter comprises:
a first band-pass filter which filters a first color signal having the first reference frequency and outputs the filtered first color signal to the comparison compensation part;
a second band-pass filter which filters a second color signal having the second reference frequency and outputs the filtered second color signal to the comparison compensation part; and
a third band-pass filter which filters a third color signal having the third reference frequency and outputs the filtered third color signal to the comparison compensation part.

17. The light source assembly of claim 16, wherein
the comparison compensation part generates a first light quantity control signal which compensates a light quantity of the first light source,
the comparison compensation part generates a second light quantity control signal which compensates a light quantity of the second color light source, and
the comparison compensation part generates a third light quantity control signal which compensates a light quantity of the third color light source.

18. A display apparatus comprising:
a display panel;
a light source part which provides a mixed light to the display panel and comprises color light sources, each of which emits a color light; and
a light source driving circuit comprising:
a driving control part which applies driving signals, each driving signal having a reference frequency, each respective reference frequency for a given driving signal being different than the reference frequency of other driving signals, to color light sources;
a light-sensing part which senses the mixed light and outputs a sensing signal;
a filter which filters the sensing signal based on the reference frequency of each of the driving signals and outputs color signals; and
a comparison compensation part which generates light quantity control signals based on the color signals corresponding to each of the color light sources and which compensate a light quantity of each of the color light sources based on the light quantity control signals sent to the driving control part.

19. The display apparatus of claim 18, wherein
the driving control part applies a first driving signal having a first reference frequency to a first color light source,
a second driving signal having a second reference frequency to a second color light source, and
a third driving signal having a third reference frequency to a third color light source.

20. The display apparatus of claim 19, wherein the filter comprises:
a first band-pass filter which filters a first color signal having the first reference frequency and outputs the first color signal to the comparison compensation part;
a second band-pass filter which filters a second color signal having the second reference frequency and outputs the second color signal to the comparison compensation part; and
a third band-pass filter which filters a third color signal having the third reference frequency and outputs the third color signal to the comparison compensation part.
